# EUROPÄISCHE PATENTSCHRIFT

(11) **EP 3 217 767 B1**
(45) Veröffentlichungstag und Bekanntmachung des Hinweises auf die Patenterteilung: **12.06.2024**
(21) Anmeldenummer: 17160620.5
(22) Anmeldetag: 13.03.2017
(51) Int. Cl.: H02G 3/14, H02G 3/18, H05B 39/04

(54) **HAUSTECHNIKANORDNUNG**
DOMESTIC TECHNOLOGY ASSEMBLY
SYSTÈME DE MAISON INTELLIGENTE

(30) Priorität: 11.03.2016 DE 102016204045
(43) Veröffentlichungstag der Anmeldung: 13.09.2017
(73) Patentinhaber: Dr. Ralf Hinkel Holding GmbH, 67657 Kaiserslautern (DE)
(72) Erfinder: Hinkel, Ralf, Dr., 67724 Höringen (DE); Hinkel, René, 67724 Höringen (DE)
(74) Vertreter: Pietruk, Claus Peter

(56) Entgegenhaltungen:
- EP-A1- 0 840 418
- EP-A2- 2 924 830
- WO-A1-2013/144970
- DE-A1- 2 711 322
- DE-U1-202007 000 791
- FR-A1- 3 000 308
- FR-A5- 2 118 269
- GB-A- 969 872
- GB-A- 1 086 373

## Beschreibung

Die vorliegende Erfindung bezieht sich auf das oberbegrifflich Beanspruchte und befasst sich somit mit Haustechnikanordnungen.

Bei Haustechnikinstallationen wie Gegensprechanlagen, Rollladensteuerungen, Temperatursteuerungen und Sensoren, Lichtschaltern und so weiter sind im Regelfall Funktionseinheiten - bzw. Bedieneinheiten wie Schalter, Displays, Mikrofone und Lautsprecher usw. in einer Einbaudose angeordnet, über welche die in der Wand geführten Kabel an die jeweiligen Funktionseinheit herangeführt werden. Funktionseinheit und Wandeinbaudose ist dabei im Regelfall ein Rahmen zugeordnet, der für einen ästhetisch ansprechenden Wandanschluss sorgt.

Prinzipiell ist es für die Funktion solcher Haustechnik-Bedienelemente unerheblich, ob die Anordnung exakt lotrecht oder geringfügig schief montiert ist; gleichwohl beeinflusst eine nicht lotrechte Montage aber schon bei geringen Abweichungen von der Horizontalen das ästhetische Empfinden sehr vieler Benutzer.

Dies gilt besonders dort, wo als Funktionseinheiten Displays verwendet werden, da diese funktionsgemäß intensiv betrachtet werden. Noch gravierender wird dies bei besonders hochwertigen Haustechnikanordnungen mit Display, weil für diese oftmals besonders große Displays verwendet werden, so dass sich über die längeren Kanten eine schiefe Montage viel leichter erkennen lässt.

Prinzipiell wäre es möglich, Einbaudosen, beispielsweise Unterputzdosen, so zu verbauen, dass nach Einbau der Haustechnikanordnung die gewünschte exakte Ausrichtung erhalten wird. Dies erfordert jedoch, dass die Einbaudose, beispielsweise die verwendete Unterputzdose sehr exakt verbaut wird und ergo beim Einbauen der Dose in der Wand keine Ausrichtefehler auftreten.

Da dies per se sehr schwierig und teuer ist, wurde bereits vorgeschlagen, eine Unterputzdose-Montageeinheit zu schaffen, die die Korrektur von Ausrichte-Fehlern, welche beim Einbauen der Dose in die Wand gemacht wurden, ermöglicht und die insbesondere Korrekturen eines schräg ausgerichteten Gerätes ermöglicht. Verwiesen sei diesbezüglich auf die DE 20 2007 000 791 Ul. Darin wird eine Unterputzdose -Montageeinheit für ein elektrisches Gerät mit einer Wanddose aus Kunststoff und einem in der Wanddose fixierbaren metallischen Einsatz zum Halten des Gerätes vorgeschlagen, wobei dafür weiter vorgeschlagen wird eine an der Wanddose befestigt gehaltene Vorrichtung, an der der Einsatz verstellbar angebracht ist.

Die bekannte Anordnung erfordert es, zunächst die Unterputzdose einzubauen, dann den metallischen Einsatz anzubringen, danach den Einsatz in einer solchen Stellung auszurichten, dass sich nachfolgend eine horizontale Ausrichtung ergibt und erst dann das elektronische Gerät einzubauen. Dies bedeutet jedoch, dass für eine sehr exakte Ausrichtung des Einsatzes entweder eine Lehre verwendet werden muss, die anzeigt, wie das elektrische Gerät später genau sitzen wird, oder aber das elektrische Gerät wiederholt aufgesetzt werden muss, die Justierung ermittelt werden muss, das elektrische Gerät abgenommen werden muss, nachfolgend eine Veränderung der Justierung des Einsatzes erfolgt, das Gerät wieder aufgesetzt wird und neuerlich die Ausrichtung überprüft wird. Dies muss sich fortsetzen, bis eine zufriedenstellende Ausrichtung erzielt ist. Es wird einzusehen sein, dass dieses Vorgehen zwar ermöglicht, allmählich zu einer korrekten Ausrichtung zu gelangen, dass dieses Vorgehen aber immer noch mühsam ist.

Aus der GB 969 872 ist eine Einbaudose aus Metall bekannt, die mit einem Erdleiter verbunden werden kann und mit Innengewinde versehene Teile aufweist, die Schrauben aufnehmen können, mit welchen eine Frontabdeckung angebracht werden kann. Um eine gewisse Beweglichkeit zu ermöglichen, sollen dabei die mit Gewinde versehenen Teile an einem Metallstreifen vorgesehen sein.

Aus der DE 2711322 A1 ist ein Gehäuse für elektrische Geräte, insbesondere von Sprech-/ und/oder Klingelanlagen, bestehend aus einer Dose, einem darauf aufsetzbaren Blendrahmen und einer mit dem Blendrahmen verbindbaren Frontplatte bekannt. Dabei soll der Blendrahmen einen parallel zum Boden der Dose ausgerichteten Tragrand aufweisen, der umfangsseitig mit vorstehenden, eine Einfassung für die Frontplatte bildenden Randleisten abgeschlossen ist, von denen mindestens eine lösbar mit dem Blendrahmen verbindbar ist und mindestens zwei dem Tragrand zugekehrt die eingebrachte Frontplatte teilweise übergreifen und am Blendrahmen festhalten.

Aus der EP 0 840 418 Al ist eine Einbaudose für elektrisches Installationsmaterial bekannt, die einen Boden sowie eine oder mehrere Seitenwände und Verbindungselemente zur Befestigung des Installationsmaterials in der Dose umfasst. Die Verbindungselemente sind in einer parallel zum Boden verlaufenden Ebene entlang einer Linie in einem spitzen oder rechten Winkel zur zugehörigen Seitenwand bewegbar. Die Verbindungselemente können auch so ausgelegt sein, daß sie in einer parallel zum Boden verlaufenden Ebene an verschiedenen Stellen entlang einer Linie in einem spitzen oder rechten Winkel zur zugehörigen Seitenwand Verbindungselemente vom Installationsmaterial aufnehmen. Das Installationsmaterial umfaßt einen Rahmen mit einem Anzahl von Schlitzen. Die Schlitze sind in einem Winkel zur vorgenannten Linie gerichtet.

Aus der DE 1590485 Al entsprechend GB 1 086 373 ist eine Unterputzabzweigdose mit einem Boden, Seitenwänden und einem an diesen mit Hilfe von Schrauben o.dgl. befestigbaren entfernbaren Deckel bekannt, wobei in den Seitenwänden gebogene Langlöcher vorgesehen sind, deren Krümmungsmittelpunkt auf der mittleren Achse der Dose liegt, d.h. auf der zu dem Boden senkrechten Achse, welche durch das Trägheitszentrum der Dose geht, wobei Teile zur Befestigung des Deckels an der Dose in diese Langlöcher eingesetzt und in diesen befestigt werden können.

Aus der FR 3 000 308A1 ist ein abnehmbares Modul für eine elektrische Ausrüstung bekannt. Ein Einsatz und ein Basisteil weisen dabei aufeinander zuweisend an einem Umfang eine feine Verzahnung auf, wobei durch Eingriff der Verzahnung eine Winkelausrichtung des Einsatzes festgelegt werden kann.

Eine Anzeigevorrichtung, welche an einer Wand montierbar ist und welche aus einer konstruktiven und funktionellen Moduleinheit besteht, die direkt in eine Unterputzdose eingebaut ist und die ein Gehäuse beinhaltet, ist aus der EP 2 924 830 A2 bekannt. Es wird darin vorgeschlagen, dass das Gehäuse eine stirnseitige Glasplatte umfasst.

Aus der FR 2118269 ist eine Haustechnikanordnung bekannt, bei welcher relativ zu einer Wandeinbaudose verschiedentliche Muttern der Befestigung einer Frontplatte dienen. Aus der WO 2013/ 144 970 A1 ist eine Wandeinbaudose bekannt, vor welcher eine Rahmen ebenfalls justierbar angeordnet werden kann.

Es ist wünschenswert, eine sichere und ästhetisch ansprechende Anordnung anzugeben, bei welcher die Justierung auf einfache Weise schnell erfolgen kann.

Die Aufgabe der vorliegenden Erfindung besteht darin, Neues für die gewerbliche Anwendung bereitzustellen.

Die Lösung dieser Aufgabe wird im unabhängigen Anspruch 1 beansprucht. Bevorzugte Ausführungsformen finden sich in den Unteransprüchen.

Die vorliegende Erfindung schlägt somit in einem ersten Grundgedanken vor, dass bei einer Haustechnikanordnung gemäß Anspruch 1 mit einer Funktionseinheit, einem dieser zugeordneten Rahmen und einer Wand-Einbaudose vorgesehen ist, dass der Rahmen Durchgangslöcher mit dahinter angeordneten Schrauben aufweist und an der Wand-Einbaudose zur Justierung der Funktionseinheit hin und her beweglich gefasste bzw. geführte Muttern für die Schrauben angeordnet sind.

Indem Durchgangslöcher im Rahmen mit dahinter angeordneten Schrauben vorgesehen werden, über welche der Rahmen mit relativ zur Wandeinbaudose beweglichen, aber davon gefassten Muttern befestigt werden kann, ist eine Montage und Justierung extrem einfach möglich. Der Rahmen kann beziehungsweise die dessen Löchern durchdringenden Schrauben können zunächst mit den Muttern verbunden werden; dann kann durch Hin und Her-Bewegung eine gute Ausrichtung erzielt werden und es können dann die Schrauben in der korrekten Ausrichtung angezogen werden. Damit kann eine Feinjustierung noch einmal unmittelbar vor Festziehen der justierungs-bestimmenden Schrauben erfolgen und es ist nur ein Justierschritt erforderlich.

In einem besonders bevorzugten Fall wird die Funktionseinheit zur Kommunikation mit Gegenstellen ausgebildet sein. In einem solchen Fall müssen ein Mikrofon und ein Lautsprecher vorgesehen sein. Um eine gute Wiedergabequalität zu gewährleisten, werden in einem solchen Fall typisch Öffnungen für den Schalldurchtritt am Rahmen vorgesehen sein. Die jeweiligen Durchtritts-Öffnungen werden dafür bevorzugt beabstandet voneinander im Rahmen angeordnet sein, weil einerseits akustische Rückkopplung vermieden oder minimiert werden soll und andererseits der Lautsprecher im Regelfall oberhalb des Mikrofons anzuordnen ist, da Benutzer typisch dicht an der Haustechnikanordnung stehen werden und dann die besagte Anordnung durch die jeweils größere Nähe des Mundes zum Mikrofon und der Ohren zum Lautsprecher für die Verständlichkeit aufzunehmenden und wiederzugebenden Schalls vorteilhaft ist.

Es ist erfindungsgemäß möglich und bevorzugt, diese Durchtritts-Öffnungen zugleich als Durchgangslöcher für die Schrauben zu verwenden. Die Schrauben können dann in geradliniger Fortsetzung eines Eintrittsloches im Rahmen angeordnet sein, während die Schallwellen, nötigenfalls durch geeignet gebogene Strukturen im Rahmen und/oder an der Funktionseinheit von einem Lautsprecher zur Öffnung bzw. von der Öffnung zum Mikrofon geführt werden.

Es sei darauf hingewiesen, dass die entsprechenden Durchgangslöcher sehr klein ausfallen können, weil es ohne weiteres ausreicht, Schrauben mit etwa einem Innensechskant-(Inbus)- Kopf zu verwenden. Dies erlaubt die Benutzung mit sehr kleinen Durchgangslöchern, deren Funktion als Durchtrittslöcher für Schrauben auch nicht ohne weiteres erkannt wird. Damit ergeben sich Vorteile nicht nur für das Design der Anordnung, sondern auch für die Sicherheit gegen Demontage bzw. Sabotage. Die Durchgangslöcher können insbesondere bevorzugt nur einen kleineren Durchmesser als die Schrauben aufweisen.

Es ist möglich und vorteilhaft, wenn die Funktionseinheit ein Display umfasst, das mit dem Rahmen fest verbunden ist. Prinzipiell würde es ausreichen, mit dem Rahmen ein Display zu verwenden, das vor Fixierung des Rahmens an der Wand-Einbaudose noch relativ zum Display zu bewegen ist beziehungsweise nach Justierung nur noch relativ von der Wandebene weggekippt werden kann. In einem solchen Fall könnte die Fixierung etwa durch Klemmen auf das Anziehen der Befestigungsschrauben erfolgen. Wesentlich bevorzugt ist es jedoch, wenn eine dauerhaft feste Verbindung gegeben ist, etwa dadurch, dass der Rahmen das Display bereits allseitig umgreift und somit eine Verschiebung des dadurch am Rahmen befestigten Display verhindert wird. Auf die Möglichkeit, Rahmen und Display z.B. zu verkleben usw. sei hingewiesen.

Es entspricht der Erfindung nach Anspruch 1, wenn am Rahmen zumindest zwei Durchgangslöchern mit dahinter angeordneten Schrauben vorgesehen sind und zwar vorzugsweise an gegenüberliegenden Kanten des Rahmens. Dies ist einerseits, wie aus dem vorstehenden bereits ersichtlich, dort besonders sinnvoll, wo die Haustechnikanordnung ein Mikrofon und einen Lautsprecher umfasst, insbesondere ein Display, ein Mikrofon und einen Lautsprecher, und es ist andererseits eine hinreichend feste Anlage an einer Wand zu erwarten. Es sei darauf hingewiesen, dass dort, wo besonders problematische Wände vorliegen, etwa weil Wände in sich gekrümmt sind, mehr Schrauben vorgesehen sein können und/oder hinreichend flexible Rahmen verwendbar sind.

Gemäß der Erfindung sind die Schrauben unverlierbar gehalten und vorzugsweise ausgerichtet gehalten und/oder so angeordnet, dass die an den im Rahmen befindlichen Schrauben eine Führung hintergreifen können. So ist die Montage besonders vereinfacht, weil keine besonderen Maßnahmen ergriffen werden müssen, bis die Schrauben zumindest in den dann grob ausgerichteten Muttern greifen.

Die Schrauben werden in einer bevorzugten Variante in das Doseninnere selbst eindringen, d.h. die Dose wird bevorzugt so groß sein, dass der auf die Ebene des Displays projizierte Wanddosenrand das Display umgeben wird. Dies ermöglicht insbesondere auch, was bevorzugt ist, einen in der Wand liegenden Einbau. Dort, wo besonders große Display verwendet werden sollen, aber der Aufwand gescheut wird, eine hinreichend große Dose in der Art einer Unterputzdose in die Wand einzubauen, können auch entlang der Wand aus der Dose heraus gestreckte Arme verwendet werden, an denen die Muttern beweglich gefasst sind. Die Arme sind dann entsprechend so zu dimensionieren, dass sie sich entlang der Wand bis zu der gewünschten Stelle am Rahmen erstrecken. Gegebenenfalls können dazu separate Arme an der Unterputzdose befestigt werden. Es ist auch möglich, anstelle von einzelnen Armen eine über die Dose überkragende Befestigungsan- ordnung vorzusehen, die selber fest in der Dose oder an der Dose angebracht wird und welche die beweglich gefassten Muttern trägt.

Es ist möglich und bevorzugt, wenn die Muttern entlang einer gekrümmten Bahn geführt sind, insbesondere einer derart gekrümmten Bahn, dass der Bahnmittelpunkt zumindest näherungswei-se in der Mitte des Displays liegt.

Es sei erwähnt, dass die Muttern entweder geführt sein können, um lediglich eine Korrektur einer Abweichung von der Horizontalen zu erlauben, oder aber so gefasst sind, dass die (Führungs-)Bahn vergleichsweise breit ist, was es erlaubt, nicht nur Abweichungen von der Horizontalen zu korrigieren, sondern, wenn auch gegebenenfalls in sehr geringem Umfang, eine Verschiebung nach oben oder unten vorzunehmen. Dies kann dort vorteilhaft sein, wo in einem Raum mehrere Haustechnikanordnungen auf gewünscht gleicher Höhe entfernt voneinander anzubringen sind und eine Möglichkeit geschaffen werden soll, etwaige geringe Höhen-Abweichungen bei der Einbringung der Unterputzdosen bzw. Wandeinbauten zu kompensieren.

Es sei darauf hingewiesen, dass es möglich ist, auch bei Verwendung eines Rahmens, der die Justierung erleichtert, eine besonders präzise Messung der Raumtemperatur zu ermöglichen.

Dazu wird vorgeschlagen, dass bei einer anspruchsgemäßen Haustechnikanordnung mit einer Funktionseinheit, einem dieser zugeordneten Rahmen und einer Wandeinbaudose zumindest ein Temperatursensor zur Erfassung temperaturindikativer Signale am Rahmen bei einer Ecke außerhalb der Wand-Einbaudose, zumindest ein Sensor zur Erfassung von Signalen näher der Funktionseinheit-(Ab-)Wärmequellen bei der Wandeinbaudose sowie ein Umgebungstemperatur-Bestimmungsmittel vorgesehen ist, das dazu ausgebildet ist, zur Umgebungstemperaturbestimmung rahmennäher bzw. rahmennah erfasste temperaturindikative Signale im Ansprechen auf wärmequellennahe erfasste Signale zu kompensieren. Rahmennähe bzw. Wärmequellennähe bezieht sich dabei darauf, dass zwei Temperatur-Sensoren an unterschiedlichen Stellen verbaut sind. Einer dieser Sensoren wird näher am Rahmen liegen als der andere; dies ist der rahmennähere Sensor. Im Gegenzug dazu wird der andere - rahmenfernere - Sensor der Wärmequelle näher liegen als der näher an der Rahmenkante bzw. der Rahmenecke angeordnete Sensor. Die Relativierung "näher" bezieht sich insoweit auf solche Sensorpaare.

Es sei insoweit darauf hingewiesen, dass bei typischen Haustechnikanordnungen nach Anspruch 1 die Messung einer aktuellen Raumtemperatur ohne externen Sensor vor allen Dingen dann schwierig ist, wenn die Haustechnikanordnung, was als besonders attraktiv für Endverbraucher anzusehen ist, mit einem Display wie einem berührungsempfindlichen Bildschirm (Touchscreen) versehen ist. In einem solchen Fall wind typisch eine Reihe von Wärmequellen wie Displaybeleuchtungen, Prozessor-Einheiten usw. darin vorgesehen, die die eigene Temperatur massiv beeinflussen können, aber durch über die Zeit variierende Leistungs-Aufnahmen nicht ohne weiteres einen konstanten Einfluss auf eine erfasste Temperatur besitzen.

Es sei darauf hingewiesen, dass es besondere Vorteile bietet, den Rahmen sowohl gut ausrichten zu können als auch so auszugestalten, dass eine besonders präzise Umgebungstemperaturmessung mit der Haustechnikanordnung möglich ist, dass es jedoch nicht zwingend ist, eine Haustechnikanordnung wie beschrieben justierbar zu machen, um die Vorteile der hier vorgeschlagenen Anordnung bei der Temperaturmessung zu erhalten, so dass die Vorteile der hier zur Temperaturmessung vorgeschlagenen Anordnung auch dann erhalten werden könnten, wenn die Haustechnikanordnung nicht zugleich einen justierbaren Rahmen wie in Anspruch 1 beschrieben aufwiese und insofern außerhalb des Schutzumfangs der Ansprüche läge.

Es ist vorteilhaft, wenn der Sensor zur Erfassung von Signalen der Funktionseinheit-Abwärme-Quellen ausgebildet ist, um die Leistungsaufnahme einer oder aller Komponenten bzw. einer auf die Leistungsaufnahme der Komponenten leicht zu beziehenden Größe zu ermitteln. Dazu kann beispielsweise der aktuelle CPU-Takt, die aktuelle CPU-Auslastung, falls verfügbar die Leistungsaufnahme von CPU -Prozessordaten, die Helligkeitsstufen einer Displaybeleuchtung, die mit einem Audioverstärker eingestellte Lautstärke und/ oder die Auslastung von Kommunikationsschnittstellen erfasst werden. Dies wäre eindeutig ein nahe an der Hauptwärmequelle erfasstes Signal, das temperaturindikativ ist.

Es ist auch möglich, Temperaturen unmittelbar bei den Abwärmequellen zu messen, sei es durch etwa CPU-interne Temperatursensoren und/ oder separat vorgesehene, zwischen den Komponenten oder auf den Komponenten angeordnete Temperatursensoren, insbesondere solche Komponenten mit erwartungsgemäß hoher Leistungsaufnahme.

Es wird besonders bevorzugt sein, wenn eine Vielzahl von Sensoren für die Erfassung von Signalen in bzw. an der Funktionseinheit vorgesehen sind und dann das Umgebungstemperatur-Erfassungsmittel eine Kompensation, etwa unter Berücksichtigung eines mit dieser Vielzahl von Sensoren ermittelten Temperaturgradienten, bestimmt. Dabei ist es insbesondere möglich, Temperaturen bei bzw. Temperaturgradienten zu einem linken bzw. rechten Rand zu bestimmen, insbesondere einer dort angeordneten Ecke. Wo ein Display verwendet wird, ist es bevorzugt, die Displaybeleuchtung als intensive Wärmequelle nahe der Oberkante anzuordnen und die Temperaturmessung am Rahmen nahe der Unterkante vorzunehmen.

Typisch wird die Rahmenkante, an der die Temperatur gemessen wird, außerhalb der Wandein-baudose bzw. nah am Rand der Wandeinbaudose liegen. Der Begriff Sensornähe wird dabei so verstanden, dass sich der Einfluss des Rahmens jedenfalls stärker ausweitet als bei der Wärmequelle. Bei typischen Bildschirmgrößen von z.B. 8 Zoll ist einsichtig, dass ein Abstand unter 1,5 cm bevorzugt unter 1 cm eingehalten werden muss. Bei größeren oder kleineren Bildschirmgrößen können diese Abstände variieren, insbesondere skalierend mit der Bildgröße.

Es wird einzusehen sein, dass die sich im Betrieb einstellende Temperaturdifferenz zwischen der Temperatur im Inneren einer Wandeinbaudose und der Temperatur an den Ecken des Rahmens von einer Vielzahl auch bauwerklicher Einflüsse abhängen wird. So kann etwa ein Teil der in der Wärmeeinbaudose erzeugten Wärme in die Wand fließen und diese allmählich erwärmen. In welchem Umfang dies einer Erwärmung des Wandeinbaudosen-Inneren entgegenwirkt, wird von etwa der Wärmeleitfähigkeit und der Wärmekapazität sowie der anfänglichen Wandtemperatur abhängen.

Es ist möglich, unter bestimmten Betriebsbedingungen derartige Einflüsse zumindest abzuschätzen und eine Berücksichtigung solcher Effekte vorzunehmen. So kann etwa davon ausgegangen werden, dass dann, wenn eine Haustechnikanordnung nach längerer Unterbrechung wieder in Betrieb genommen wird, die Temperatur im Wandeinbaudosen-Inneren zunächst der Umgebungstemperatur angepasst ist und erst mit der Zeit ansteigt. Es kann dann z.B. die Anstiegsgeschwindigkeit herangezogen werden, um bestimmte Effekte abzuschätzen und somit die Temperaturbestimmung zu verbessern. Insbesondere kann durch Berücksichtigung einer Temperaturänderungsgeschwindigkeit bei Einschalten abgeschätzt werden, wie sich die Temperatur an den jeweiligen Sensoren bei einem Sprung oder einer allmählichen Änderung der Leistungsaufnahme mitändert. Dies kann zur Temperaturkompensation verwendet werden.

Die Erfindung wird im Folgenden nur beispielsweise anhand der Zeichnung beschrieben. In dieser ist dargestellt durch
- Fig. 1: eine Einbaudose für eine Haustechnik-Anordnung der vorliegenden Erfindung mit beweglich gefassten Muttern in verschiedenen Ansichten;
- Fig. 2: vergrößerte Ansichten zu dem Ausführungsbeispiel von Fig. 1;
- Fig. 3: ein Rahmen zur Verwendung mit der Einbaudose von Fig. 1 von hinten;
- Fig. 4: der Rahmen von Fig. 3 von vorne.

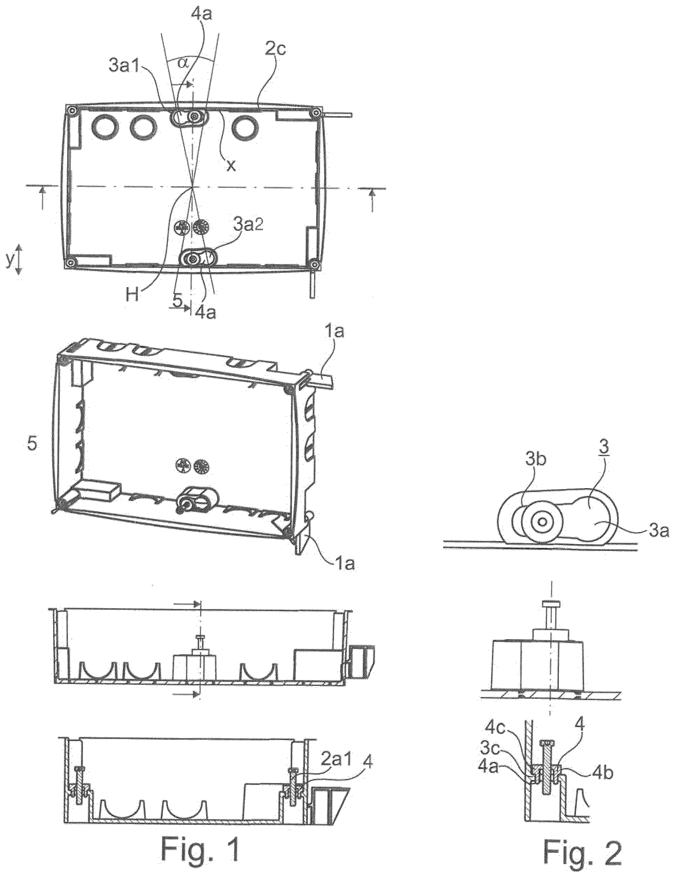

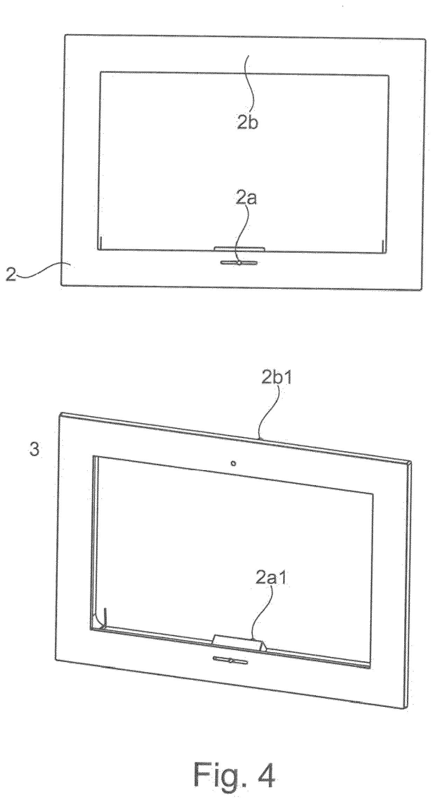

Fig. 1 zeigt eine allgemein mit 1 bezeichnete Wandeinbaudose für eine Haustechnikanordnung mit einer Funktionseinheit (nicht gezeigt), einem dieser zugeordneten Rahmen (2, Fig. 4), wobei der Rahmen zwei Durchgangslöcher 2a, 2b mit dahinter angeordneten Schrauben 2a1, 2b1 aufweist und an der Wand-Einbaudose 1 zur Justierung der Funktionseinheit gemeinsam mit ihrem Rahmen hin und her beweglich gefasste Muttern 4 für die Schrauben 2a1, 2b1 angeordnet sind.

Bei der Haustechnikanordnung kann es sich vorliegend um eine Anordnung handeln, mit der eine Vielzahl von Geräten wahlweise bedient werden kann und zwar über einen Touchscreen, das heißt einen berührungsempfindlichen Bildschirm, der im Rahmen angeordnet ist, wobei der Rahmen den Displayrand überkragt.

Der Rahmen 2 ist zum Inneren der Wandeinbaudose 1 hin mit einer Schürze 2c versehen, welche die Rückseite des berührungsempfindlichen Bildschirm (nicht gezeigt) im Gebrauch umgibt, den Bildschirm fixieren kann sowie eventuell zur Funktionseinheit gehörende weitere Komponenten wie Platinen und dergleichen für Schnittstellen, Prozessoren usw. tragen kann. Diese weiteren Komponenten können separat bzw. am Rahmen befestigt und wie erforderlich mit dem Bildschirm über Leitungen verbunden sein; alternativ und/oder zusätzlich können sie auch am Bildschirm selbst befestigt sein.

Der Bildschirm ist relativ zum Rahmen im dargestellten Ausführungsbeispiel nicht beweglich. Damit dies gewährleistet ist, kann das Display an den Rahmen mit Ansätzen versehen, denen komplementäre Ausnehmungen 2d1 bis 2d6 innerhalb des von der Schürze umgebenen Bereiches auf der Innenseite des Rahmens und außerhalb des für das Display freigelassenen Innenwand zugeordnet sind. Es sei darauf hingewiesen, dass einleuchtender Weise eine andere Zahl als 6 Ausnehmungen vorgesehen sein kann und dass nicht zwingend am Bildschirm Ansätze und am Rahmen Ausnehmungen für die Realisierung einer Bildschirmorientierung festlegenden Komplementärpaar-Anordnung vorgesehen sehen sein müssen.

Es sei im übrigen erwähnt, dass mit Bildschirm vorliegend nicht allein auf die Oberfläche der Anzeige Bezug genommen wird, sondern auf die Gesamtkomponente als Ganzes, die auch Controller, die Bildschirm-Beleuchtung usw. umfasst und typisch als Einheit verbaut wird.

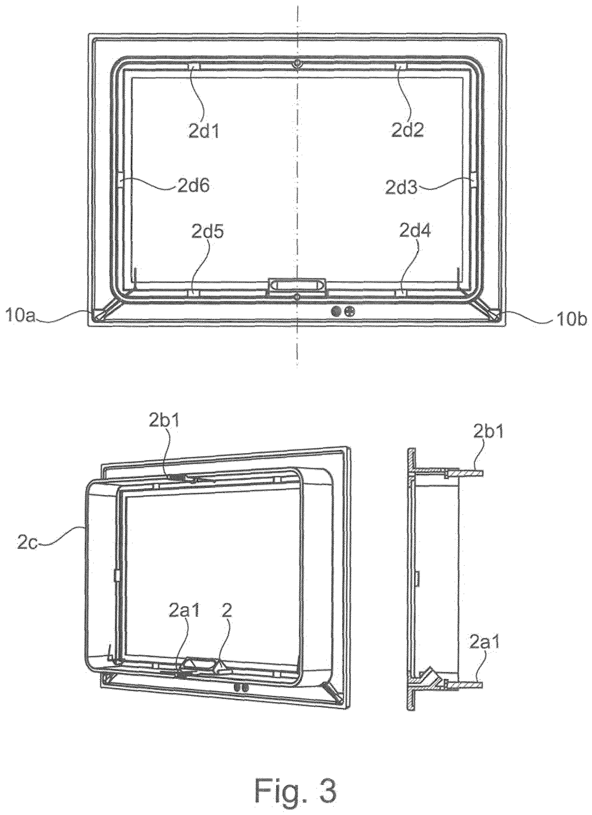

Die Haustechnikanordnung ist so gebildet, dass sowohl Schall wiedergegeben werden kann als auch Geräusche mit einem Mikrofon aufgenommen werden können. Als Schalldurchtrittslöcher für aufzunehmende Geräusche ist in dem bei Gebrauch unteren Bereich des Rahmens, d.h. nahe der im Gebrauch unteren Rahmenkante, ein Durchgangsschlitz vorgesehen, in dessen Mitte das erste Durchgangsloch 2a angeordnet ist. Wie in Fig. 3 erkennbar, führt ein gekrümmter Kanal 2i nach innen, wo nach abgeschlossener Montage ein Mikrofon angeordnet sein wird. Für den Schall aus dem Lautsprecher ist das obere Loch vorgesehen, unter welchem auch die Schraube gehalten ist.

Am Rahmen 2 ist die Schraube 2a1 unverlierbar gehalten, ebenso wie die Schraube 2b1, so dass der gesamte Rahmen mit den Schrauben gemeinsam bewegt werden kann. In der oberen Rahmenkante ist das Durchgangsloch 2b ebenfalls innerhalb des umschürzten Bereiches angeordnet.

Wie aus Fig. 1, oberste Ansicht, erkennbar ist, ist die Wandeinbaudose im vorliegenden Ausführungsbeispiel so bemaßt, dass sie den Schürzenbereich des Rahmens vollständig aufnehmen kann und dabei zugleich so tief, dass sie sämtliche am Rahmen angeordnete Bauteile wie Bildschirm, zugehörige Schnittstellen usw. aufnehmen kann.

Die vom Rahmen nach innen wegstehende Schürze hat dabei zur Wandeinbaudose so viel seitliches Spiel, dass eine Rahmenausrichtung zumindest innerhalb der problemfrei erzielbaren Ein-baugenauigkeiten für die Wandeinbaudose ausreicht, um eine exakt horizontale Bildschirm-Ausrichtung zu gewährleisten. Es sei erwähnt, dass unterschiedliche Wandeinbaudosengestaltungen möglich sind, insbesondere eine Ausgestaltung mit seitlich am Rand angesetzten Flügeln lal, la2, die eine sichere Verankerung in Hohlwänden ermöglichen; für spezifische Zwecke können andere Wandeinbaudosen ohne weiteres verwendet werden, etwa mit Abdichtungen an den Kabeldurchführungen (nicht gezeigt), um insbesondere nahe einer Gebäudeaußenwand taupunktbedingte Probleme zu vermeiden usw. Die eigentlichen Durchgangslöcher sind nicht gezeigt, wohl aber die Bereiche lb, an denen Durchbrüche an der Wandeinbaudose vorgenommen werden können.

Zwecks Justierung des in der Wandeinbaudose zu befestigenden Rahmens sind nun die Muttern in einer Anformung 4a aufgenommen. Diese Anformung 4a ist, wie in Figur 1 ersichtlich, soweit über den Boden der Wandeinbaudose erhaben, dass eine in die Mutter 4 eingedrehte Schraube 2a1, 2b1 nicht mit ihrem Gewindeende am Boden der Wandeinbaudose anstoßen kann. Die Schraube kann vielmehr ohne Gefahr des Anstoßens vollständig in die Mutter eingeschraubt werden.

Wie in Figur 1 ersichtlich, ist die Anformung auf der Oberseite mit einem Langloch 3 versehen, welches an einem Ende mit einer Erweiterung 3a versehen ist, durch welche die Mutter eindringen kann, um nach Verschieben im gegenüber der Erweiterung verjüngten Bereich 3b des Langloches von der Kante desselben zurückgehalten zu werden. Prinzipiell wäre dies ohne weiteres mit herkömmlichen Muttern wie Sechskantmuttern oder dergleichen möglich, bevorzugt ist es jedoch, Muttern zu verwenden, die aus Kunststoff gebildet sind, zur Anformung 3 hin Finger 4a, 4b aufweisen, eine Eintiefung für die Langloch-Kante 3c besitzen und oberhalb des Langloches erweitert sind, vergleiche 4c in Figur 2, so dass die Anordnung eine wohldefinierte Anlagefläche für den Rahmen aufweist, wenn dieser mit der Schraube gegen die Wandeinbaudose angezogen wird. Es erfolgt also eine Kraftvergleichmäßigung durch die Mutterausgestaltung.

Wie in Figur 1 erkennbar, ist auf der einen Seite der Wandeinbaudose die Erweiterung 3a1 des ersten Langloches links von der Mitte der Wandeinbaudose vorgesehen, während auf der gegenüberliegenden Wandeinbaudosen-Seite die Erweiterung 3a2 des anderen Langloches auf der rechten Seite der Mittellinie angeordnet ist. Das Langloch erstreckt sich jeweils über die Mitte 5 der Wandeinbaudose 1 hinaus weg von der Erweiterung 3a1 bzw. 3a2. Die Mitte des Langlochsverlaufs ist soweit von der inneren Wandeinbaudosen-Wandung entfernt, vergleiche Pfeil X, dass der Rahmen mitsamt Bildschirm soweit bewegt werden kann, dass die Muttern an den linken bzw. rechten Langlochrand anschlagen können, wenn der Bildschirm um die Mitte M der Wandeinbaudose herum verschwenkt wird. Der sich ergebende Schwenkwinkel ist in Figur 1 mit "alpha" bezeichnet. Typisch wird alpha etwa 10° betragen, was eine weitere Kompensation erlaubt. Die Langlöcher sind zudem so breit gestaltet, dass eine - wenn auch geringere Bewegung parallel zur kurzen Rahmenkante und somit bei Gebrauch zur Veränderung der absoluten Höhe möglich ist.

### Die Anordnung wird verwendet wie folgt:

Zunächst wird der Rahmen mit Schrauben versehen, an welche vorne bereits Muttern aufgedreht sind, und zwar nur ein geringes Stück weit. Dann wird der Rahmen mit gegen die Horizontale deutlich verkippter Langkanten-Achse so in die Wand-Einbaudose bewegt, dass die Muttern in die Erweiterungen 3a1 und 3a2 der jeweiligen Langlöcher in der Anformung 4a im Inneren der Wand-Einbaudose eintreten.

Dann kann der Rahmen ungefähr horizontal ausgerichtet werden und es können beide Schrauben angezogen werden, bis die Bewegung des Rahmens in der Wand Einbaudose nur noch mit leichtem Kraftaufwand erzielt werden kann. Damit ist zugleich eine anfängliche Fixierung einer Ausrichtung erreicht, d.h. der Rahmen bewegt sich nicht mehr nur durch Einwirkung der Schwerkraft in der Einbaudose. Es kann jetzt eine exakte Ausrichtung des Rahmens unter leichtem Kraftaufwand auf den Rahmen erzielt werden. Als leichter Kraftaufwand wird hier eine Kraft verstanden, die sich ohne weiteres mit 2 Fingern einer Hand ausüben lässt. Sobald die Justierung erfolgt ist, können die Schrauben angezogen werden, ohne dass die Gefahr besteht, dass sich dabei der Rahmen noch bewegen wird, weil zu diesem Zeitpunkt kein verkippendes Kraftmoment mehr auf den Rahmen ausgeübt wird. Danach ist der Bildschirm horizontal sauber ausgerichtet, ohne dass mehrfache Justageschritte erforderlich waren.

Wenn nun die Anordnung im Betrieb genommen wird und eine Raumtemperatur erfasst werden soll, kann die dargestellte Anordnung wie in Figur 3 ersichtlich einerseits Temperatursensoren 10a, 10b an den Rahmenecken aufweisen, und zwar bevorzugt an den im Gebrauch unteren Rahmenecken. Zudem werden Mittel für die Erzeugung von für die Wandeinbaudosen-Innentemperatur indikativen Signalen vorgesehen. Bei diesen kann es sich z.B. um Temperatursensoren handeln, etwa nahe der Beleuchtung des Bildschirmes (nicht gezeigt), die im Gebrauch typisch an der Oberkante des Bildschirms liegen werden, um Temperatursensoren nahe einem Controller bzw. einer CPU, die dem Bildschirm zugeordnet ist, oder um Temperatursensoren nahe von anderen wichtigen Verbrauchern wie Audioverstärkern usw.. Alternativ und/oder zusätzlich können als Mittel für die Erzeugung von für die Wandeinbaudosen-Innentemperatur indikativen Signalen etwa Mittel zum Feststellen einer aktuellen Frequenz eines im Betrieb veränderlichen Mikrokontroller-Taktes, einer aktuellen Leistungsaufnahme der Haustechnikanordnung oder dergl. vorgesehen sein.

Es wird jetzt einzuschätzen sein, dass die im Inneren der Wandeinbaudose angeordneten elektrischen Verbraucher wie Monitorbeleuchtung, Prozessor und dergleichen Abwärme erzeugen und dies bei typischen Verhältnissen dazu führen wird, dass die Temperatur im Inneren der Wandeinbaudose höher sein wird als die Umgebungstemperatur entfernt von der Haustechnikanordnung. Zugleich wird einzuschätzen sein, dass die Temperatur nahe der Rahmenecken zwar noch von den (Ab-)Wärmequellen im Inneren der Wandeinbaudose beeinflusst sein wird, dass aber an den Rahmenecken die Beeinflussung durch die im Inneren der Wandeinbaudose vorhandene Wärmequellen geringer sein wird als bei jenen Temperatursensoren, die näher an diesen Wärmequellen angeordnet sind. Es wird mit anderen Worten einsichtig sein, dass ein Temperaturgradient zwischen dem Wandeinbaudosen-Inneren und den Rahmenecken sowie der weiter entfernten Umgebung bestehen wird.

Um ungeachtet der Beeinflussung der Temperatursensoren durch die Wärmequellen aus dem Einbaudoseinneren eine Abschätzung der Umgebungstemperatur zu erlauben, wird nun gemäß einem weiteren Aspekt der Erfindung vorgeschlagen, dass die temperaturindikativen Signale, die rahmennah erfasst werden, im Ansprechen auf (ab-) wärmequellennah erfasste Signale kompensiert werden.

Dazu wird bei dieser Abschätzung nicht nur ausgenutzt, dass ein Temperaturgradient vom Inneren zum Äußeren durch die Wärmequellen im Wandeinbaudosen-Inneren auftreten kann, sondern es wird auch ausgenutzt, dass ungeachtet der Einbauspezifika und der wechselnden Leistungsaufnahme der Haustechnikanordnung und somit auch ungeachtet der wechselnden Abwärmeerzeugung in der Wandeinbaudose gleichwohl eine sehr weit gehende Kompensation desselben möglich wird. Diese Erkenntnis erlaubt durch die Kompensation eine recht genaue Abschätzung der tatsächlichen Umgebungstemperatur ungeachtet der von den Abwärmequellen innerhalb der Wandeinbaudose beeinträchtigten Temperatursensoren in den Rahmenecken.

Die Kompensation der am Rahmen erfassten temperaturindikativen Signale auf erhöhte Temperaturen in der Wand-Einbaudose kann in einer einfachen Ausgestaltung von durchschnittlichen Werten in üblichen Einbauten ausgehen. Dazu können für verschiedene Installationen in unterschiedlichen Wänden, unterschiedlichen Räumen usw. tatsächliche Umgebungstemperaturen gemessen werden und dann für eine Vielzahl von Betriebsbedingungen die temperaturindikativen Signale sowohl im Wandeinbaudosen-Inneren als auch an den Randkanten bzw. Randecken mit den dortigen Temperatursensoren erfasst werden, um dann angemessene Gradienten bzw. Kompensationsgrößen zu bestimmen. Es kann ein reiner Gradient bestimmt werden und daraus auf die Raumtemperatur geschlossen werden.

Dieses einfache Vorgehen verbessert die Messung der Umgebungstemperatur ungeachtet des Vorhandenseins von Abwärmequellen bereits ganz erheblich.

In einer weiter bevorzugten Variante ist es möglich, spezifische Eigenschaften eines tatsächlich gegebenen Einbaus zu berücksichtigen. Dazu kann etwa erfasst werden, wie sich bei sprungartiger großer Änderung der im Inneren der Wandeinbaudose verbrauchten Leistung die vermeintliche Temperatur an der Rahmenkante bzw. in den Rahmenecken ändert.

Wenn unterstellt wird, dass die Abwärmeänderungen im Wandeinbaudosen-Inneren so schnell und so groß sind, dass tatsächliche Änderungen der Umgebungstemperatur dagegen vernachlässigt werden können, werden Änderungen nahe der Rahmenkanten dann nur durch die größere, innerhalb der Wandeinbaudose entstehende Wärme verursacht. Der an der Rahmenkante bzw. Rahmenecke erfolgende Temperaturanstieg kann beobachtet werden und eine entsprechende einbauspezifische Kompensation aus dem Anstieg ermittelt werden. Zugleich kann, insbesondere nach sehr langen Zeiten, zu denen eine allenfalls marginale Energieaufnahme durch die Haustechnikanordnung erfolgt ist, davon ausgegangen werden, dass die Temperatur im Rahmen nahezu der Umgebungstemperatur entspricht. Es ist daher auch ohne weiteres möglich, durch Erfassung der Temperatur einerseits zu Zeiten langandauernder geringer Aktivität und andererseits bei sprungartiger Änderung der Abwärmelast nach solchen Zeiten festzustellen, wie stark in einer gegebenen Installation der Einfluss einer bestimmten Abwärmeleistung oder einer sich im Inneren einer Wand-einbaudose eingestellt habenden Temperatur auf die Temperatursensoren am Rahmen ist.

Damit wird es insbesondere möglich, dass sich eine Haustechnikanordnung selbst einlernt, das heißt das aus tatsächlichen Messwerten bestimmt wird, wie die erfindungsgemäß vorgesehene Kompensation im Einzelfall vorgenommen werden muss.

Es wird einsichtig sein, dass es in einem solchen Fall nicht zwingend ist, tatsächlich Temperaturen im Inneren der Wandeinbaudose zu messen, sondern dass stattdessen auch problemfrei mit temperaturbeeinflussenden und somit für die Temperatur indikativen Größen wie der Leistungsaufnahme einzelner wichtiger Verbraucher, der aktuellen und/oder vorhergehenden Gesamt-Leistungsaufnahme einer Haustechnikanordnung gearbeitet werden kann.

## Patentansprüche

1. Haustechnikanordnung aufweisend
eine Funktionseinheit,
einen der Funktionseinheit zugeordneten Rahmen (2 ) mit Schrauben (2a1, 2bl)
und
eine Wandeinbaudose (1) mit Muttern (4) für die Schrauben, an welcher der Rahmen (2)
mit
den Schrauben (2al,2b 1)
und
den
in der Wandeinbaudose (1)
zur Justierung der Funktionseinheit
hin- und her beweglich geführten
Muttern für die Schrauben
justierbar anzuschrauben ist,
wobei
zumindest zwei Durchgangslöcher (2a, 2b) im Rahmen (2) vorhanden sind,
**dadurch gekennzeichnet, dass**
die Schrauben (2a1,2b1) hinter den Durchgangslöchern unverlierbar (2a, 2b) am Rahmen (2) gehalten sind.

2. Haustechnikanordnung nach dem vorhergehenden Anspruch, **dadurch gekennzeichnet, dass** die Schrauben (2a1,2b1) in das Wandeinbaudoseninnere eindringen.

3. Haustechnikanordnung nach einem der vorhergehenden Ansprüche, **dadurch gekennzeichnet, dass** die Muttern entlang gekrümmter Bahnen beweglich sind.

4. Haustechnikanordnung nach dem vorhergehenden Anspruch, **dadurch gekennzeichnet dass** die Funktionseinheit ein Mikrofon und einen Lautsprecher aufweist und der Schalldurchgang dafür über die Durchgangslöcher erfolgt.

5. Haustechnikanordnung nach einem der vorhergehenden Ansprüche, **dadurch gekennzeichnet** die Funktionseinheit ein Display umfasst, das mit dem Rahmen (2) fest verbunden ist.

6. Haustechnikanordnung nach dem vorhergehenden Anspruch, **dadurch gekennzeichnet, dass** der Rahmen (2) zum Inneren der Wandeinbaudose hin mit einer Schürze (2c) versehen ist, welche die Rückseite des Displays umgibt.

7. Haustechnikanordnung nach dem vorhergehenden Anspruch, **dadurch gekennzeichnet, dass** die Schürze den Bildschirm fixiert

8. Haustechnik Anordnung nach einem der vorhergehenden Ansprüche, **dadurch gekennzeichnet, dass** der Rahmen (2) die Wand-Einbaudose und, sofern die Haustechnikanordnung ein Display umfasst, auch dieses überkragt.

9. Haustechnikanordnung nach dem vorhergehenden Anspruch, worin die Schrauben (2a1,2b1) einen Innensechskant aufweisen.
und
die Durchgangslöcher einen kleineren Durchmesser als die Schrauben (2a1,2b1) aufweisen.

10. Haustechnikanordnung nach einem der vorhergehenden Ansprüche, **dadurch gekennzeichnet, dass** die zumindest zwei Durchgangslöcher mit dahinter angeordneten Schrauben (2a1,2b1) an gegenüberliegenden Kanten eines rechteckigen Rahmens (2) angeordnet sind.

11. Haustechnikanordnung nach einem der vorhergehenden Ansprüche **dadurch gekennzeichnet, dass** zumindest ein Temperatursensor zur Erfassung temperaturindikativer Signale am Rahmen (2) in einer Ecke außerhalb der Wandeinbaudose, zumindest ein Sensor zur Erfassung von Signalen nahe der Funktionseinheit-Abwärmequellen bei der Wandeinbaudose sowie ein Umgebungstemperatur-Bestimmungsmittel, das dazu ausgebildet ist, zur Umgebungstemperaturbestimmung rahmennah erfasste temperaturindikative Signale im Ansprechen auf abwärmequellennah erfasste Signale zu kompensieren, vorhanden ist.

12. Haustechnikanordnung nach dem vorhergehenden Anspruch, **dadurch gekennzeichnet, dass** der zumindest eine Sensor zur Erfassung von Signalen innerhalb der Funktionseinheit-Abwärmequellen ausgebildet ist zur Erfassung und/oder Abschätzung der Leistungsaufnahme oder darauf bezogener Größen von Komponenten, insbesondere von CPUs, Displaybeleuchtungen, Audioverstärkern und/ oder Schnittstellen, und/oder zur Messungen der Temperaturen innerhalb solcher Komponenten und/oder innerhalb der Wandeinbaudose.

13. Haustechnikanordnung nach einem der beiden vorhergehenden Ansprüche, **dadurch gekennzeichnet, dass** mehrere Sensoren für die Erfassung von Signalen bei der Funktionseinheit vorhanden sind und das Umgebungstemperatur-Bestimmungsmittel zur Kompensation im Ansprechen auf daraus ermittelte Temperaturgradienten ausgebildet ist.

## Claims

1. Domestic technology assembly having
a functional unit,
a frame (2) assigned to the functional unit and having screws (2a1, 2b1)
and a wall mounting box (1) with nuts (4),
to which the frame (2) should be adjustably screwed using the screws (2a1, 2b1) and nuts for the screws, said nuts being guided in the wall mounting box (1) so as be able to move back and forth , for the purpose of adjusting the functional unit, ,
wherein
at least two through holes (2a, 2b) are present in the frame (2),
**characterized in that**
the screws (2a1, 2b1) are held captive on the frame (2) behind the through holes (2a, 2b).

2. Domestic technology assembly according to the preceding claim, **characterized in that** the screws (2a1, 2b1) penetrate into the wall mounting box interior.

3. Domestic technology assembly according to either of the preceding claims, **characterized in that** the nuts are movable along curved trajectories.

4. Domestic technology assembly according to the preceding claim, **characterized in that** the functional unit has a microphone and a loudspeaker, and the passage of sound therefor is implemented via the through holes.

5. Domestic technology assembly according to any of the preceding claims, **characterized in that** the functional unit comprises a display securely connected to the frame (2).

6. Domestic technology assembly according to the preceding claim, **characterized in that** towards the interior of the wall mounting box the frame (2) is provided with a skirt (2c) which surrounds the back side of the display.

7. Domestic technology assembly according to the preceding claim, **characterized in that** the skirt secures the electronic visual display.

8. Domestic technology arrangement according to any of the preceding claims, **characterized in that** the frame (2) projects beyond the wall mounting box and also projects beyond a display provided the latter is comprised by the domestic technology arrangement.

9. Domestic technology assembly according to the preceding claim, wherein the screws (2a1, 2b1) have a hexagon socket and the through holes have a smaller diameter than the screws (2a1, 2b1).

10. Domestic technology assembly according to any of the preceding claims, **characterized in that** the at least two through holes with screws (2a1, 2b1) arranged therebehind are arranged on opposite edges of a rectangular frame (2).

11. Domestic technology assembly according to any of the preceding claims, **characterized in that** there are present: at least one temperature sensor for acquiring signals indicative of temperature at the frame (2) in a corner outside of the wall mounting box, at least one sensor for acquiring signals near the functional unit exhaust heat sources at the wall mounting box and an ambient temperature determination means designed, for the purpose of determining the ambient temperature, to compensate signals indicative of temperature, acquired near the frame, in response to signals acquired near exhaust heat sources.

12. Domestic technology assembly according to the preceding claim, **characterized in that** the at least one sensor for acquiring signals within the functional unit exhaust heat sources is designed to acquire and/or estimate the power consumption or related parameters of components, in particular of CPUs, display illuminations, audio amplifiers and/or interfaces, and/or to measure the temperatures within such components and/or within the wall mounting box.

13. Domestic technology assembly according to either of the two preceding claims, **characterized in that** a plurality of sensors for acquiring signals are present at the functional unit and the ambient temperature determination means is designed for compensation in response to temperature gradients determined therefrom.

## Revendications

1. Ensemble de domotique comprenant
une unité fonctionnelle,
un cadre (2) associé à l'unité fonctionnelle et muni de vis (2a1, 2b1)
et un boîtier de montage mural (1) pourvu d'écrous (4), sur lequel le cadre (2) peut être vissé de manière réglable avec les vis (2a1, 2b1) et les écrous guidés suivant un mouvement alternatif dans le boîtier de montage mural (1) et destinés aux vis afin de régler l'unité fonctionnelle,
dans lequel au moins deux trous traversants (2a, 2b) sont présents dans le cadre (2),
**caractérisé en ce que**
les vis (2a1, 2b1) sont retenues imperdables (2a, 2b) sur le cadre (2) derrière les trous traversants.

2. Ensemble de domotique selon la revendication précédente, **caractérisé en ce que** les vis (2a1, 2b1) pénètrent à l'intérieur du boîtier de montage mural.

3. Ensemble de domotique selon l'une des revendications précédentes, **caractérisé en ce que** les écrous sont mobiles le long de trajectoires incurvées.

4. Ensemble de domotique selon la revendication précédente, **caractérisé en ce que** l'unité fonctionnelle comporte un microphone et un haut-parleur et le passage du son se fait par les trous traversants.

5. Ensemble de domotique selon l'une des revendications précédentes, **caractérisé en ce que** l'unité fonctionnelle comprend un afficheur qui est relié de manière fixe au cadre (2).

6. Ensemble de domotique selon la revendication précédente, **caractérisé en ce que** le cadre (2) est muni d'une collerette (2c) qui est placée plus à l'intérieur du boîtier de montage mural et qui entoure le côté arrière de l'afficheur.

7. Ensemble de domotique selon la revendication précédente, **caractérisé en ce que** la collerette fixe l'écran.

8. Ensemble de domotique selon l'une des revendications précédentes, **caractérisé en ce que** le cadre (2) dépasse du boîtier de montage mural et, si l'ensemble de domotique comprend un afficheur, dépasse également de celui-ci.

9. Ensemble de domotique selon la revendication précédente, dans lequel les vis (2a1, 2b1) sont à six pans creux et les trous traversants ont un diamètre inférieur à celui des vis (2a1, 2b1).

10. Ensemble de domotique selon l'une des revendications précédentes, **caractérisé en ce que** les au moins deux trous traversants, en arrière desquels sont disposées des vis (2a1, 2b1), sont disposés sur des bords opposés d'un cadre rectangulaire (2).

11. Ensemble de domotique selon l'une des revendications précédentes, **caractérisé en ce qu'**au moins un capteur de température est prévu pour détecter des signaux indicatifs de température sur le cadre (2) dans un coin à l'extérieur du boîtier de montage mural, au moins un capteur est prévu pour détecter des signaux à proximité de sources de chaleur perdue de l'unité fonctionnelle dans le boîtier de montage mural et un moyen de détermination de température ambiante est prévu qui est conçu pour compenser des signaux indicatifs de température détectés à proximité du cadre en réponse à des signaux détectés à proximité de sources de chaleur perdue afin de déterminer la température ambiante.

12. Ensemble de domotique selon la revendication précédente, **caractérisé en ce que** l'au moins un capteur est conçu pour détecter des signaux à l'intérieur de sources de chaleur perdue d'unité fonctionnelle afin de détecter et/ou d'estimer la consommation électrique ou des grandeurs associées de composants, en particulier de CPU, d'éclairages d'afficheur, d'amplificateurs audio et/ou d'interfaces, et/ou de mesurer les températures à l'intérieur de ces composants et/ou dans le boîtier de montage mural.

13. Ensemble de domotique selon l'une des deux revendications précédentes, **caractérisé en ce que** plusieurs capteurs sont prévus pour détecter des signaux dans l'unité fonctionnelle et le moyen de détermination de température ambiante est conçu pour effectuer une compensation en réponse à des gradients de température déterminés à partir desdits capteurs.
